(19)

**Europäisches Patentamt**
**European Patent Office**
**Office européen des brevets**

(11)  **EP 3 866 116 B1**

(12)  **EUROPEAN PATENT SPECIFICATION**

(45) Date of publication and mention
of the grant of the patent:
**23.08.2023 Bulletin 2023/34**

(21) Application number: **20382109.5**

(22) Date of filing: **14.02.2020**

(51) International Patent Classification (IPC):
**G06T 11/00** $^{(2006.01)}$     **G06T 5/10** $^{(2006.01)}$

(52) Cooperative Patent Classification (CPC):
**G06T 11/001;** G06T 2207/20204

(54) **COMPUTER-IMPLEMENTED METHOD FOR ADDING TEXTURE TO A DIGITAL IMAGE**

COMPUTERIMPLEMENTIERTES VERFAHREN ZUM HINZUFÜGEN VON TEXTUR ZU EINEM DIGITALEN BILD

PROCÉDÉ MIS EN ŒUVRE PAR ORDINATEUR PERMETTANT D'AJOUTER UNE TEXTURE DANS UNE IMAGE NUMÉRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.08.2021 Bulletin 2021/33**

(73) Proprietors:
• **Universitat Pompeu Fabra**
**08002 Barcelona (ES)**
• **Universidad Politécnica De Madrid**
**28040 Madrid (ES)**

(72) Inventors:
• **Bertalmío Barate, Marcelo**
**08002 Barcelona (ES)**
• **Zabaleta Razquin, Itziar**
**08002 Barcelona (ES)**
• **Dalton Canham, Trevor**
**08002 Barcelona (ES)**

• **Cámara Largo, Mateo José**
**28040 Madrid (ES)**
• **Díaz Martín, César**
**28040 Madrid (ES)**
• **García Santos, Narciso**
**28040 Madrid (ES)**

(74) Representative: **Isern Patentes y Marcas S.L.**
**Avda. Diagonal, 463 Bis, 2°**
**08036 Barcelona (ES)**

(56) References cited:
• **MASMOUDI KHALED ET AL: "Streaming an image through the eye: The retina seen as a dithered scalable image coder", SIGNAL PROCESSING. IMAGE COMMUNICATION, ELSEVIER SCIENCE PUBLISHERS, AMSTERDAM, NL, vol. 28, no. 8, 31 July 2012 (2012-07-31), pages 856-869, XP028698267, ISSN: 0923-5965, DOI: 10.1016/J.IMAGE.2012.07.005**

EP 3 866 116 B1

## Description

## TECHNICAL FIELD OF THE INVENTION

The present invention relates to a method of digital image processing, and more particularly to a computer-implemented method for adding texture, which emulates the retinal noise, to a digital image.

## BACKGROUND OF THE INVENTION

It is well known that an established way to improve the appearance of digital images is to add a certain amount of fine-detail texture to them.

In this regard, user studies, as for example T. Kurihara, Y. Manabe, N. Aoki and H. Kobayashi, "Digital image improvement by adding noise: An example by a professional photographer", Journal of Imaging Science and Technology, vol. 55, no. 3, pp. 30503-1, 2011, and X. Wan, H. Kobayashi, and N. Aoki, "Improvement in perception of image sharpness through the addition of noise and its relationship with memory texture", in Human Vision and Electronic Imaging XX, vol. 9394, 2015, p.93941 B, have shown that observers do indeed prefer images with some noise.

In cinema and TV fiction the standard practice is to add texture to digitally-shot content, and this texture invariably takes the form of film grain. This particular choice of texture aims to mimic the look of film.

In the movie industry the most popular methods for film grain emulation are based on assembling a database of scannings of different types of film stock with varying forms of grain, that are superimposed on the digital image that is processed.

For these methods there is a compromise between the speed and the realism of the result: the fastest algorithms overlay grain that is somewhat independent from the content of the digital image, which may produce noticeable artifacts especially when there is motion, and the methods producing the more visually pleasing results are computationally very intensive, requiring special hardware.

Due to their computational complexity, existing methods impose restrictions on the creative work of filmmakers, preventing them from having an accurate representation of how the movie will look in postproduction after the synthetic texture is added on the set.

The emulation of film grain is also limiting because the artists are not able to really experiment with a wide diversity of texture options, nor to introduce novel looks.

An added complexity is the following one: image content with high frequency detail, like film grain, requires a higher bit rate in order to be compressed properly, i.e. for a given visual quality level, "clean" video requires less bits than video with film grain.

For this reason, B.T. Oh, C.-C. J. Kuo, S. Sun and S. Lei, "Film grain noise modelling in advanced video coding", in Visual Communications and Image Processing 2007, vol. 6508, 2007, p. 650811; B. T. Oh, S.-M. Lei, and C.-C. J. Kuo, "Advanced film grain noise extraction and synthesis for high-definition video coding", IEEE Transactions on Circuits and Systems for Video Technology, vol. 19, no. 12, pp.1717-1729, 2009; J. Dai, O. C. Au, C. Pang, W. Yang, and F. Zou, "Film grain noise removal andy synthesis in video coding", in 2010 IEEE International Conference on Acoustics, Speech and Signal Processing, 2010, pp. 890-893; and A. Norkin and N. Birkbeck, "Film grain syntesis for av 1 video codec", in 2018 Data Compression Conference, 2018, pp. 3-12, disclose methods in the field of video compression that improve coding efficiency based on the following steps, first, denoising the input video (removing the film grain), then modeling the noise with a set of parameter values which are transmitted alongside the denoised video, and finally at the decoder re-synthesizing the film grain noise and adding it back to the decoded denoised video. It is also known the document by Masmoudi, Khaled et al., "Streaming an image through the eye: The retina seen as a dithered scalable image coder" in Signal Processing. Image communication, Elsevier Science Publishers, Amsterdam, NL, vol. 28, no. 8, 31 July 2012, pages 856-869, which discloses a virtual retina model using a two stage process, namely filtering the image with a bank of difference of Gaussians with time-delays, followed by time-dependent analog-to-digital conversion.

These methods raise serious problems in order to be used in practice in video as they require practical solutions to very challenging problems like video denoising.

Regarding this latter point, the importance of coding efficiency cannot be emphasized enough.

In the media industry there is a constant push in cinema, broadcast and streaming services towards ever higher resolution, framerate and dynamic range. The accompanying increase in data volume that these new formats bring imposes considerable demands on transmission bandwidth and memory, and as a result the problem of compressing video is as relevant as ever.

For example, Ultra High-Definition (UHD)/4K video requires bit rates nearly 10 times higher than Standard Definition (SD) video and Full HD (FHD)/2K around four or five times higher. In addition, video traffic is expected to account for more than 80% of all IP traffic in the following years. Faced with these remarkable data, content and service providers are constantly searching for ways to provide increasingly higher quality video and quality of experience (QoE) at restrained bit rates.

In this respect, they can exploit the fact that most users are not able to perceive some objective quality drops under some conditions. In fact, the visibility of image distortions is reduced by the presence of another stimulus, a masking pattern. This phenomenon is called "visual masking" and it is a well-known property of visual perception. Visual masking takes several forms, as it depends on different properties of the image stimuli: luminance, colour, temporal variations, spatial patterns. Visual masking is a key perceptual phenomenon for the design of image and video compression algorithms, and in particular texture masking or pattern masking has been successfully applied for video coding.

## DESCRIPTION OF THE INVENTION

The invention proposes a method for adding texture to a digital image that overcomes all the above-mentioned drawbacks and limitations.

The method allows to add texture to a digital image, comprising the mentioned method the following steps:

- transforming the digital image into an image R that emulates the retinal output;
- adding noise $n_r$ to the image R in order to obtain a noisy image $R_r$;
- applying to the noisy image $R_r$ the inverse of the transformation applied to the digital image in order to obtain a final image O.

The digital image normally is composed by 3 colour channels.

The steps of the method are performed in an apparatus for processing an image (as for example: a computer). In this regard, the digital image can be already stored in the apparatus as the digital image has been received previously, being the method a computer-implemented method, wherein the computer provides a digital image but the method can also include a previous step consisting in receiving the digital image.

More specifically, the main purpose of this method is to obtain a digital image to which a simulation of the retinal noise is added in order that the resulting image has a more natural appearance as noise is present in retinal signals, in photopic (daytime) vision as well.

In consequence, the digital image obtained after applying the method includes the emulation of retinal noise as a texture, providing the resulting digital image with more realism.

Please note that this method is proposed as an alternative to film grain emulation but it also offers the advantage consisting in the fact that it has a very low computational complexity, so it is amenable for a real-time implementation that can be used on set.

As retinal noise emulation is added to a digital image, another advantage of this method is the fact that it can be used to improve the quality of compressed video by masking compression artifacts.

In this regard, as mentioned above, concerning the methods for adding texture (mainly the emulation of film grain) of the state of the art, the grain is roughly estimated via a denoising process (which is still an open problem), parametric models of film grain provide coarse approximations and the corresponding methods are intended just for films with grain.

However, the method according to the invention can be used with any kind of content of the digital image.

More specifically, once the movie creator has taken the decision to add a certain amount and type of this retinal noise emulation to improve the look of the digital film, the movie distributor can use this fact to its advantage by encoding the "clean" content at a lower bit rate and adding the retinal noise emulation after decoding, the exact same retinal noise emulation that the content creator decided was right for the movie, thus masking the visual artifacts produced by the reduced bit rate and yielding the same QoE of a higher bit rate.

Please note that in a preferred embodiment of the invention this method can be implemented either jointly on each of the colour channels of the digital image or separately for each individual colour channel.

Normally, each colour channel of the digital image is represented in the range [0,1].

In another preferred embodiment, the transformation carried out on the digital image simulating the retinal output involves simulating the response of photoreceptors to the light stimulus of the digital image.

In this regard, please note that the retina is a thin sheet of neural tissue that lines the back of the eye and transforms light into electrical signals. It is composed of five cells types that are arranged in three cellular layers separated by two in-between layers, called plexiform layers. The photoreceptor cells (rod and cones) in the outermost layer, absorb light and convert it into electrical signals. These signals are passed to bipolar cells, which in turn connect to retinal ganglion cells in the innermost layer. In addition to this vertical pathway the retinal circuit includes many lateral connections provided by horizontal cells in the outer plexiform layer and amacrine cells in the inner synaptic layer. Retinal ganglion cells are the output neurons of the retina and their axons form the optic nerve that transmits the visual signal form the retina to the brain.

Photoreceptors transform the light reaching the retina into electrical signals. The response of photoreceptors is non-linear and, for single cell without feedback, can be well approximated by the Naka-Rushton equation, which is a particular instance of a divisive normalization operation, i.e. a process that computes the ratio between the response of an individual neuron and some weighted average of the activity of its neighbours, and this in turns allows the photoreceptor response to adapt to the average light level therefore optimizing its operative range.

The mentioned Naka-Rushton equation yielding the image $I_p$ (emulation of the response of photoreceptors) from the digital image I, for every pixel location x, is the following one:

$$I_p(x) = \frac{(I(x))^n}{(I(x))^n + I_s^n}$$

wherein I(x) is the value of the digital image at pixel x, n controls the slope of this nonlinear function and is a value in the following range: $0.5 \leq n \leq 1$, and $I_S$ is the semisaturation constant and is a value in the following range: $0.1 \leq Is \leq 0.5$.

Then, the image $I_p$ is the emulation of the response of photoreceptors to the light stimulus of the digital image.

In a preferred embodiment, the values of n and $I_S$ are 0.74 and 0.18, respectively.

$I_p$ is convolved with a center-surround kernel in order to obtain the image R that emulates the retinal output, and more specifically this convolution performs the simulation of the lateral inhibition or center-surround organization of both bipolar cells and retinal ganglion cells.

In this regard, please note that the lateral inhibition or center-surround processing, in which a cell's response is modelled as the difference between the activity of the cell's closest neighbours and the activity of the cells in the near ring-shaped surround, allows to encode and enhance contrast therefore being important for efficient representation, and is present at every stage of visual processing from the retina to the cortex.

Computationally, this kernel is defined by the following formula:

$$K = F^{-1} \left( \frac{1}{0.81 + 0.2F(G_K)} \right)$$

wherein $F$ is the Fourier transform, $G_K$ is a 2D Gaussian kernel with standard deviation equal to 1/3 of the maximum of the height of the digital image dimension or of the width of the digital image dimension.

As this kernel is invertible, it involves an important advantage for the method as the digital image can be processed easily as well the final image can be deprocessed also easily, providing higher quality video and quality experience at a lower bit rate.

The inverse of this kernel is defined by the following formula:

$$K^{-1} = F^{-1}(0.81 + 0.2F(G_K))$$

According to another aspect of the invention, the noise $n_r$ is based on a noise signal which uses the same distribution as the noise existing in retinal ganglion cells, which has a constant standard deviation (that does not depend on the input contrast), and to which it is imposed, as well, a bandpass frequency spectrum as approximately given by the contrast sensitivity function of the visual system:

$$\text{noise signal} = (G_c - G_s) * I_N$$

$I_N$ is an image with white Gaussian noise of zero mean and standard deviation of value 1, and Gc and Gs are 2D Gaussian kernels, whose shapes are determined by their 2x2 covariance matrices.

These 2D Gaussian kernels can be either symmetric or non-symmetric; please note that symmetric kernels involve less computational complexity, while nonsymmetrical kernels allow to modify the shape of the generated retinal noise.

If the kernel is symmetric, the corresponding covariance matrix is not needed as the kernel can be described simply with the standard deviation of the Gaussians, $\sigma_c$ for $G_c$ and $\sigma_s$ for $G_s$. In this case, preferably, $\sigma_c$ is between the values 0.02 and 2, more preferably 0.7, while $\sigma_s$ is between the values 0.01 and 2, more preferably 1.5.

If the kernels are non-symmetric, $G_C$ has the following covariance matrix $\Sigma_C = \begin{pmatrix} \sigma_{cxx}^2 & 0 \\ 0 & \sigma_{cyy}^2 \end{pmatrix}$ wherein $\sigma_{cxx}^2$ is a value in the following range $0.02 \leq \sigma_{cxx}^2 \leq 1$ and $\sigma_{cyy}^2$ is a value in the following range $0.02 \leq \sigma_{cyy}^2 \leq 1$ and Gs has the following covariance matrix $\Sigma_S = \begin{pmatrix} \sigma_{sxx}^2 & 0 \\ 0 & \sigma_{syy}^2 \end{pmatrix}$ wherein $\sigma_{sxx}^2$ is a value in the following range $0.01 \leq \sigma_{sxx}^2 \leq 2$ and $\sigma_{syy}^2$ is a value in the following range $0.01 \leq \sigma_{syy}^2 \leq 2$. Preferably, $\sigma_{cxx}^2$ is 0.2, $\sigma_{cyy}^2$ is 0.05, $\sigma_{sxx}^2$ is 1 and $\sigma_{syy}^2$ is 0.25.

This noise signal is added to the image R (the image that emulates the retinal output) weighted by an a scale factor in the following range: $0 \leq a \leq 1$. This scale factor allows to moderate the desired noise level in the final image.

Then, the noise $n_r$ added to the image R is computed as:

$$n_r = a \left( (G_c - G_s) * I_N \right)$$

In another preferred embodiment, the scale factor a is between the values 0.01 and 0.5. Preferably, if the kernels are symmetric the scale factor a is 0.015 and if the kernels are non-symmetric, the scale factor a is 0.05.

As mentioned above, the method also comprises a step consisting in applying to the noisy image $R_r$ the inverse of the transformation applied to the digital image (i.e. the inverse of the convolution with K and the inverse of the photoreceptor response) in order to obtain a final image O.

The object of the present invention is also a data processing device comprising means for carrying out the steps of any embodiment of the method of the invention.

## BRIEF DESCRIPTION OF THE DRAWINGS

The previous advantages and characteristics, in addition to others, shall be understood more fully in light of the following detailed description of exemplary embodiments, with reference to the drawings attached, which must be taken by way of illustration and not limitation, wherein:

- Fig. 1 shows the resulting image of applying the method according to the invention to a digital image on the left, close-up of the resulting image in the center, and close-up of the digital image on the right;
- Fig. 2 is the view of several resulting images with different parameter choices, from top to bottom, left to right:

    a) $G_c$ and $G_s$ are symmetric Gaussian kernels, $\sigma_c$ is 1, $\sigma_s$ is 2 and $a$ is 0.05;
    b) $G_c$ and $G_s$ are symmetric Gaussian kernels, $\sigma_c$ is 0.5, $\sigma_s$ is 1 and $a$ is 0.05;
    c) $G_c$ and $G_s$ are symmetric Gaussian kernels, $\sigma_c$ is 0.5, $\sigma_s$ is 1 and $a$ is 0.1;
    d) $G_c$ and $G_s$ are non-symmetric Gaussian kernels, $\Sigma_C = \begin{pmatrix} 0.2 & 0 \\ 0 & 0.05 \end{pmatrix}$, $\Sigma_S = \begin{pmatrix} 1 & 0 \\ 0 & 0.25 \end{pmatrix}$, and $a$ is 0.05;
    e) $G_c$ and $G_s$ are symmetric Gaussian kernels, $\sigma_c$ is 0.05, $\sigma_s$ is 1 and $a$ is 0.05;
    f) $G_c$ and $G_s$ are non-symmetric Gaussian kernels, $\Sigma_C = \begin{pmatrix} 0.05 & 0 \\ 0 & 0.4 \end{pmatrix}$, $\Sigma_S = \begin{pmatrix} 0.25 & 0 \\ 0 & 4 \end{pmatrix}$, and $a$ is 0.05.

## DETAILED DESCRIPTION OF AN EXEMPLARY EMBODIMENT

As mentioned above, the basic embodiment of the method according to the invention comprises the following steps:

- transforming the digital image into an image R that emulates the retinal output;
- adding noise $n_r$ to the image R in order to obtain a noisy image $R_r$;
- applying to the noisy image $R_r$ the inverse of the transformation applied to the digital image in order to obtain a final image O.

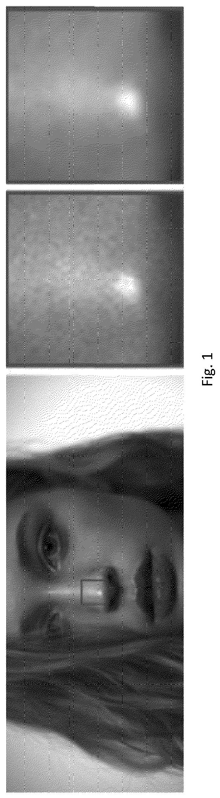

In this regard, Fig. 1 shows a final image O as the resulting image of applying the method of the invention to a digital image.

All the problems of the prior art techniques are solved and technical advantages are generally achieved by this basic embodiment of the method.

Preferably, this method is executed directly in a computer which has previously received the corresponding digital image. Then, in this embodiment, the method is a computer-implemented method wherein the computer has a digital image.

The digital image normally is composed by 3 colour channels.

In this preferred embodiment, the method according to the invention is applied separately in each colour channel of the digital image.

The method transforms the digital image into an image R that emulates the retinal output. This transformation involves the following steps:

- Obtaining an emulation of the response of photoreceptors ($I_p$) to the light stimulus of the digital image; and, preferably,
- Convolving $I_p$ with a Kernel (K).

The value of the image $I_p$ for each pixel x is obtained via the function P, known as the Naka-Rushton equation:

$$I_p(x) = P(I(x)) = \frac{(I(x))^n}{(I(x))^n + I_s^n}$$

wherein I denotes one colour channel of the digital image, n controls the slope of the transform P and its value is 0.74 and $I_S$ is the semi-saturation constant and its value is 0.18.

The inverse of the function P, denoted by P-1 can be computed as:

$$P^{-1}(v) = I_s \left( \frac{v}{1-v} \right)^{\frac{1}{n}}$$

The Kernel (K) has a center-surround form and has the following equation:

$$K = F^{-1} \left( \frac{1}{0.81 + 0.2F(G_K)} \right)$$

wherein F is the Fourier transform, $G_K$ is a 2D Gaussian kernel with standard deviation equal to 1/3 of the maximum of the height of the digital image dimension or of the width of the digital image dimension.

Please note that the inverse of this kernel (K) would be the following one:

$$K^{-1} = F^{-1}(0.81 + 0.2F(G_K))$$

Then, the image R that emulates the retinal output is the result of:

$$R = K * I_P$$

Moreover, the method according to the invention adds to R a noise $n_r$ in order to obtain the noisy image $R_r$:

$$R_r = R + n_r$$

The noise $n_r$ is an amount a of a noise signal that emulates the noise in the retinal ganglion cells:

$$n_r = a \cdot \text{noise signal}$$

For the noise signal is used the same distribution as the noise observed in retinal ganglion cells, which has a constant standard deviation (that does not depend on the input contrast), and it is imposed, as well, a bandpass frequency spectrum as approximately given by the contrast sensitivity function of the visual system:

$$\text{noise signal} = (G_c - G_s) * I_N$$

where $I_N$ is an image with white Gaussian noise of zero mean and standard deviation of value 1, and $G_c$ and $G_s$ are 2D Gaussian kernels.

The shape of the kernels $G_c$ and $G_s$ is given by their 2 X 2 covariance matrices $\Sigma_C$ and $\Sigma_S$.

If the kernels $G_c$ and $G_s$ are symmetric the covariance matrices are not needed as the kernels can be described simply with the standard deviation of the Gaussians, $\sigma_C$ for $G_c$ and $\sigma_S$ for $G_s$. Preferably, $\sigma_c$ is 0.7, $\sigma_s$ is 1.5 and a is 0.015.

If the kernels Gc and Gs are non-symmetric, Gc preferably has the following covariance matrix $\Sigma_C = \begin{pmatrix} 0.2 & 0 \\ 0 & 0.05 \end{pmatrix}$, Gs preferably has the following covariance matrix $\Sigma_S = \begin{pmatrix} 1 & 0 \\ 0 & 0.25 \end{pmatrix}$ and a preferably is 0.05. The effect of using non-symmetric kernels is a non-symmetrically distributed noise.

In consequence, the formula of $n_r$ is the following one:

$$n_r = a \left( (G_c - G_s) * I_N \right)$$

In order to obtain the final image O, the inverse of the transformation applied to the digital image is applied to the noisy image $R_r$. As the transformation applied to I consisted first in applying the function P that emulates photoreceptor responses and next in convolving with kernel K, the inverse of the transformation consists in applying first the convolution with the inverse of kernel K, denoted by $K^{-1}$, and next applying the inverse of the function P, denoted by $P^{-1}$.

Then, final image is the following one:

$$O = P^{-1}(K^{-1} * R_r)$$

Please note that said image O is the final output for the image channel corresponding to I. This process is applied independently to each of the 3 colour channels.

Please note that parameters a, $\sigma_c$, $\sigma_s$, $\Sigma_C$, and $\Sigma_S$ can be adjusted by the user allowing certain control in the size and distribution of the noise. In this regard, as a increases, the noise becomes more visible; higher values of $\sigma_c$ and $\sigma_s$ result in bigger size noise; and modifying $\Sigma_C$ and $\Sigma_S$ alters the power spectrum of the noise.

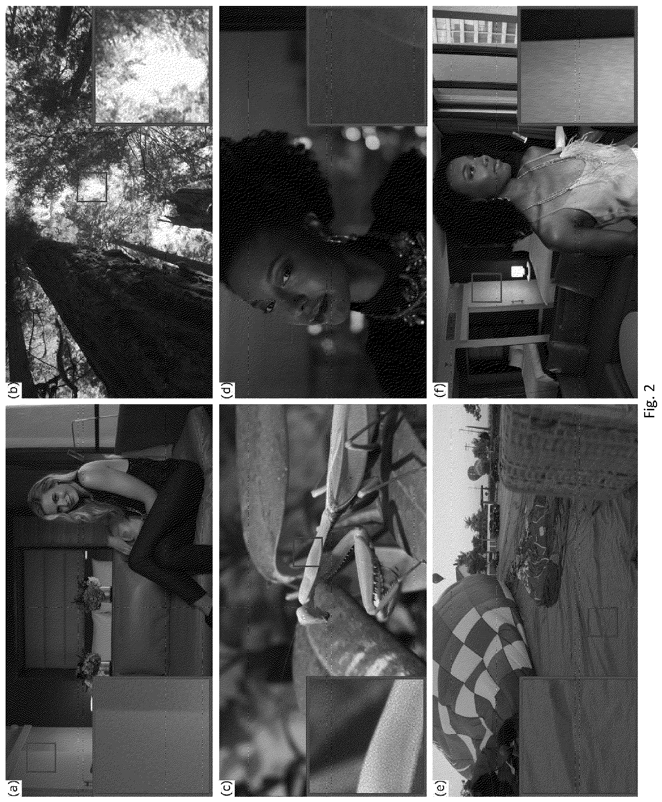

Fig. 2 is the view of several resulting images (a) to f)) with different values for the parameters a, $\sigma_c$, $\sigma_s$, $\Sigma_C$, and $\Sigma_S$, which show the different sizes and distributions of the noise that can be achieved by adjusting the mentioned parameters. More specifically:

- Fig. 2a) shows a resulting image wherein $G_c$ and $G_s$ are symmetric Gaussian kernels, $\sigma_c$ is 1, $\sigma_s$ is 2 and a is 0.05;
- Fig. 2b) shows a resulting image wherein $G_c$ and $G_s$ are symmetric Gaussian kernels, $\sigma_c$ is 0.5, $\sigma_s$ is 1 and a is 0.05;
- Fig. 2c) shows a resulting image wherein $G_c$ and $G_s$ are symmetric Gaussian kernels, $\sigma_c$ is 0.5, $\sigma_s$ is 1 and a is 0.1;
- Fig. 2d) shows a resulting image wherein $G_c$ and $G_s$ are non-symmetric Gaussian kernels, $\Sigma_C = \begin{pmatrix} 0.2 & 0 \\ 0 & 0.05 \end{pmatrix}$, $\Sigma_S = \begin{pmatrix} 1 & 0 \\ 0 & 0.25 \end{pmatrix}$, and a is 0.05;
- Fig. 2e) shows a resulting image wherein $G_c$ and $G_s$ are symmetric Gaussian kernels, $\sigma_c$ is 0.05, $\sigma_s$ is 1 and a is 0.05;
- Fig. 2f) shows a resulting image wherein $G_c$ and $G_s$ are non-symmetric Gaussian kernels, $\Sigma_C = \begin{pmatrix} 0.05 & 0 \\ 0 & 0.4 \end{pmatrix}$, $\Sigma_S = \begin{pmatrix} 0.25 & 0 \\ 0 & 4 \end{pmatrix}$, and a is 0.05.

Then, it is clear that these parameters can be varied to achieve a wide range of texture appearances, allowing movie creators to try out new looks.

Also, attention should be drawn to the fact that all the operations performed by the method of the invention are of low or very low computational complexity: the function P and its inverse can be encoded as 1D look-up tables (LUTs), so the method is essentially as fast as the time it takes to compute two convolutions, one with kernel K and the other with its inverse K-1.

Moreover, a preferred embodiment of the invention is the data processing device comprising means for carrying out the steps of this preferred embodiment of the method of the invention.

**Claims**

1. A computer-implemented method for adding texture to a digital image, wherein the computer has a digital image, comprising the method the following steps:

   - transforming the digital image into an image R that emulates the retinal output;
   - adding noise $n_r$ to the image R in order to obtain a noisy image $R_r$;
   - applying to the noisy image $R_r$ the inverse of the transformation applied to the digital image in order to obtain a final image O;

   wherein the transformation of the digital image into an image R that emulates the retinal output involves obtaining an emulation of the response of photoreceptors ($I_P$) to the light stimulus of the digital image; **characterised in that** the value of the emulation of the response of photoreceptors for each pixel x of the digital image is obtained via the function P:

$$I_p(x) = P(I(x)) = \frac{(I(x))^n}{(I(x))^n + I_s^n}$$

   wherein I denotes one colour channel of the digital image, n controls the slope of the function and is a value in the following range: $0,5 \leq n \leq 1$ and Is is the semi-saturation constant and is a value in the following range: $0,1 \leq Is \leq 0,5$.

2. A method according to the previous claim wherein n is 0,74 and $I_S$ is 0,18.

3. A method according to any of the previous claims wherein the transformation of the digital image into an image R involves also convolving the image $I_p$ with a kernel K which has a center-surround form.

4. A method according to the previous claim wherein the kernel K is defined by

$$K = F^{-1}\left(\frac{1}{0.81 + 0.2F(G_K)}\right)$$

   wherein F is the Fourier transform, $G_K$ is a 2D Gaussian kernel with standard deviation equal to 1/3 of the maximum of the height of the digital image dimension or of the width of the digital image dimension.

5. A method according to any of the previous claims wherein the noise $n_r$ is computed as:

$$n_r = a\left((G_c - G_s) * I_N\right)$$

   where $I_N$ is an image with white Gaussian noise of zero mean and standard deviation of value 1, $G_c$ and $G_s$ are Gaussian kernels and $a$ is a constant in the following range: $0 \leq a \leq 1$.

6. A method according to the previous claim wherein $G_c$ and $G_s$ are symmetric Gaussian kernels; $G_c$ has a standard deviation $\sigma_C$ in the following range: $0.02 \leq \sigma_C \leq 2$, and Gs has a standard deviation $\sigma_S$ in the following range: $0.01 \leq \sigma_S \leq 2$, and $a$ is in the following range $0.01 \leq a \leq 0.5$.

7. A method according to the previous claim wherein $\sigma_C$ is 0.7 and $\sigma_S$ is 1.5 and a is 0.015.

8. A method according to claim 5 wherein $G_c$ and Gs are non-symmetric Gaussian kernels; $G_c$ has the following covariance matrix $\Sigma_C = \begin{pmatrix} \sigma_{cxx}^2 & 0 \\ 0 & \sigma_{cyy}^2 \end{pmatrix}$ wherein $\sigma_{cxx}^2$ is a value in the following range $0.02 \leq \sigma_{cxx}^2 \leq 1$ and $\sigma_{cyy}^2$ is a value in the following range $0.02 \leq \sigma_{cyy}^2 \leq 1$ and $G_s$ has the following covariance matrix $\Sigma_S = \begin{pmatrix} \sigma_{sxx}^2 & 0 \\ 0 & \sigma_{syy}^2 \end{pmatrix}$ wherein $\sigma_{sxx}^2$ is a value in the following range $0.01 \leq \sigma_{sxx}^2 \leq 2$ and $\sigma_{syy}^2$ is a value in the following range $0.01 \leq \sigma_{syy}^2 \leq 2$ and a is in the following range $0.01 \leq a \leq 0.5$.

9. A method according to the previous claim wherein $\sigma_{cxx}^2$ is 0.2, $\sigma_{cyy}^2$ is 0.05, $\sigma_{sxx}^2$ is 1, $\sigma_{syy}^2$ is 0.25 and $a$ is 0.05.

10. A data processing device comprising means for carrying out the steps of any of the methods of claims 1 to 9.

**Patentansprüche**

1. Computerimplementiertes Verfahren zum Hinzufügen von Textur zu einem digitalen Bild, wobei der Computer über ein digitales Bild enthält, wobei das Verfahren die folgenden Schritte umfasst:

    - Umwandeln des digitalen Bildes in ein Bild R, das die Netzhautausgabe emuliert;
    - Hinzufügen von Rauschen $n_r$ zu dem Bild R, um rauschbehaftete Bild $R_r$ zu erhalten;
    - Anwenden der Umkehrung der auf das digitale Bild angewendeten Umwandlung auf das rauschbehaftete Bild $R_r$, um ein endgültiges Bild O zu erhalten;
    wobei die Umwandlung des digitalen Bildes in ein Bild R, das die Netzhautausgabe emuliert, das Erhalten einer Emulation der Reaktion von Fotorezeptoren ($I_P$) auf den Lichtreiz des digitalen Bildes einschließt; **dadurch gekennzeichnet, dass**
    der Wert der Emulation der Reaktion von Fotorezeptoren für jedes Pixel x des digitalen Bildes über die Funktion P erhalten wird:

    $$I_P(x)P(I(x)) = \frac{(I(x))^n}{(I(x))^n + I_S^n}$$

    wobei I einen Farbkanal des digitalen Bildes bezeichnet, n den Anstieg der Funktion steuert und ein Wert in dem folgenden Bereich ist: $0,5 \le n \le 1$ und Is die Halbsättigungskonstante und ein Wert in dem folgenden Bereich ist: $0,1 \le Is \le 0,5$.

2. Verfahren nach dem vorherigen Anspruch, wobei n 0,74 beträgt und $I_s$ 0,18 beträgt.

3. Verfahren nach einem der vorherigen Ansprüche, wobei die Umwandlung des digitalen Bildes in ein Bild R auch die Faltung des Bildes $I_P$ mit einem Kern K einschließt, der eine Mittenumgebungsform aufweist.

4. Verfahren nach dem vorherigen Anspruch, wobei der Kern K definiert ist durch

    $$K = F^{-1}\left(\frac{1}{0,81 + 0,2F(G_K)}\right)$$

    wobei $F$ die Fourier-Transformation ist, $G_K$ ein gaußscher 2D-Kern mit einer Standardabweichung von 1/3 des Maximums der Abmessung der Höhe des digitalen Bildes oder der Abmessung der Breite des digitalen Bildes ist.

5. Verfahren nach einem der vorhergehenden Ansprüche, wobei das Rauschen $n_r$ berechnet wird als:

    $$n_r = a((G_c - G_s) * I_N)$$

    wobei $I_N$ ein Bild mit weißem gaußschen Rauschen mit einem Mittelwert von null und einer Standardabweichung von 1 ist, $G_c$ und $G_s$ gaußsche Kerne sind und a eine Konstante in dem folgenden Bereich ist: $0 \le a \le 1$.

6. Verfahren nach dem vorherigen Anspruch, wobei $G_c$ und $G_s$ symmetrische gaußsches Kerne sind; $G_c$ eine Standardabweichung $\sigma_c$ in dem folgenden Bereich aufweist: $0,02 \le \sigma_c \le 2$ und Gs eine Standardabweichung $\sigma_s$ in dem folgenden Bereich aufweist: $0,01 \le \sigma_s \le 2$ und a in dem folgenden Bereich $0,01 \le a \le 0,5$ liegt.

7. Verfahren nach dem vorherigen Anspruch, wobei $\sigma_c$ 0,7 beträgt und $\sigma_s$ 1,5 und a 0,015 beträgt.

8. Verfahren nach Anspruch 5, wobei $G_c$ und Gs nichtsymmetrische gaußsches Kerne sind; Gc die folgende Kovarianzmatrix $\sum c = \begin{pmatrix} \sigma_{cxx}^2 & 0 \\ 0 & \sigma_{cyy}^2 \end{pmatrix}$ aufweist, wobei $\sigma_{cxx}^2$ ein Wert in dem folgenden Bereich $0,02 \le \sigma_{cxx}^2 \le 1$ ist und $\sigma_{cyy}^2$ ein Wert in dem folgenden Bereich $0,02 \le \sigma_{cyy}^2 \le 1$ ist und Gs die folgende Kovarianzmatrix $\sum s = \begin{pmatrix} \sigma_{sxx}^2 & 0 \\ 0 & \sigma_{syy}^2 \end{pmatrix}$ aufweist, wobei $\sigma_{sxx}^2$ ein Wert in dem folgenden Bereich $0,01 \le \sigma_{sxx}^2 \le 2$ ist und $\sigma_{syy}^2$ ein Wert in dem folgenden Bereich $0,01 \le \sigma_{syy}^2 \le 2$ ist und $a$ in dem folgenden Bereich $0,01 \le a \le 0,5$ liegt.

9. Verfahren nach dem vorherigen Anspruch, wobei $\sigma_{cxx}^2$ 0,2 beträgt, $\sigma_{cyy}^2$ 0,05 beträgt, $\sigma_{sxx}^2$ 1 beträgt, $\sigma_{syy}^2$ 0,25 beträgt und a 0,05 beträgt.

10. Datenverarbeitungsvorrichtung, umfassend Mittel zum Ausführen der Schritte eines der Verfahren nach den Ansprüchen 1 bis 9.

**Revendications**

1. Procédé mis en oeuvre par ordinateur destiné à l'ajout de texture à une image numérique, dans lequel l'ordinateur a une image numérique, comprenant le procédé les étapes suivantes :

   - transformation de l'image numérique en une image R qui émule la sortie rétinienne ;
   - l'ajout de bruit $n_r$ à l'image R pour obtenir une image bruitée $R_r$ ;
   - l'application à l'image bruitée $R_r$ de l'inverse de la transformation appliquée à l'image numérique pour obtenir une image finale O ;
   dans lequel la transformation de l'image numérique en une image R qui émule la sortie rétinienne implique l'obtention d'une émulation de la réponse de photorécepteurs ($I_P$) au stimulus lumineux de l'image numérique ; **caractérisé en ce que**
   la valeur de l'émulation de la réponse des photorécepteurs pour chaque pixel x de l'image numérique est obtenue par le biais de la fonction P :

$$I_p(x)P(I(x)) = \frac{(I(x))^n}{(I(x))^n + I_S^n}$$

   où I désigne un canal de couleur de l'image numérique, n contrôle la pente de la fonction et est une valeur dans la plage suivante : $0,5 \leq n \leq 1$ et $I_S$ est la constante de semi-saturation et est une valeur dans la plage suivante : $0,1 \leq I_S \leq 0,5$.

2. Procédé selon la revendication précédente dans lequel n vaut 0,74 et $I_s$ est 0,18.

3. Procédé selon l'une quelconque des revendications précédentes dans lequel la transformation de l'image numérique en une image R implique également la convolution de l'image $I_p$ avec un noyau K qui a une forme centreentourage.

4. Procédé selon la revendication précédente dans lequel le noyau K est défini par

$$K = F^{-1}\left(\frac{1}{0,81 + 0,2F(G_K)}\right)$$

   où $F$ est la transformée de Fourier, $G_K$ est un noyau gaussien 2D d'écart type égal à 1/3 du maximum de la hauteur de la dimension d'image numérique ou de la largeur de la dimension d'image numérique.

5. Procédé selon l'une quelconque des revendications précédentes dans lequel le bruit $n_r$ est calculé comme suit :

$$n_r = a\,((G_c - G_s) * I_N)$$

   où $I_N$ est une image à bruit gaussien blanc de moyenne nulle et d'écart type de valeur 1, $G_c$ et $G_s$ sont des noyaux gaussiens et a est une constante dans la plage suivante : $0 \leq a \leq 1$.

6. Procédé selon la revendication précédente dans lequel $G_c$ et $G_s$ sont des noyaux gaussiens symétriques ; $G_c$ a un écart type $\sigma_c$ dans la plage suivante : $0,02 \leq \sigma_c \leq 2$, et Gs a un écart type $\sigma_s$ dans la plage suivante : $0,01 \leq \sigma_s \leq 2$, et a est dans la plage suivante $0,01 \leq a \leq 0,5$.

7. Procédé selon la revendication précédente dans lequel $\sigma_c$ vaut 0,7 et $\sigma_s$ vaut 1,5 et a vaut 0,015.

8. Procédé selon la revendication 5, dans lequel $G_c$ et Gs sont des noyaux gaussiens non symétriques ; Gc a la matrice de covariance suivante
$$\Sigma_C = \begin{pmatrix} \sigma_{cxx}^2 & 0 \\ 0 & \sigma_{cyy}^2 \end{pmatrix}$$ où $\sigma_{cxx}^2$ est une valeur dans la plage suivante $0,02 \leq \sigma_{cxx}^2 \leq 1$ et $\sigma_{cyy}^2$ est une valeur dans la plage suivante $0,02 \leq \sigma_{cyy}^2 \leq 1$ et Gs a la matrice de covariance suivante $$\Sigma_s = \begin{pmatrix} \sigma_{sxx}^2 & 0 \\ 0 & \sigma_{syy}^2 \end{pmatrix}$$ où $\sigma_{sxx}^2$ est une valeur dans la plage suivante $0,01 \leq \sigma_{sxx}^2 \leq 2$ et $\sigma_{syy}^2$ est une valeur dans la plage suivante $0,01 \leq \sigma_{syy}^2 \leq 2$ et a est dans la plage suivante $0,01 \leq a \leq 0,5$.

9. Procédé selon la revendication précédente dans lequel $\sigma_{cxx}^2$ vaut 0,2, $\sigma_{cyy}^2$ vaut 0,05, $\sigma_{sxx}^2$ vaut 1, $\sigma_{syy}^2$ vaut 0,25 et a vaut 0,05.

10. Dispositif de traitement de données comprenant des moyens pour exécuter les étapes de l'un quelconque des procédés des revendications 1 à 9.

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. KURIHARA ; Y. MANABE ; N. AOKI ; H. KOBAYASHI.** Digital image improvement by adding noise: An example by a professional photographer. *Journal of Imaging Science and Technology,* 2011, vol. 55 (3), 30503-1
- **X. WAN ; H. KOBAYASHI ; N. AOKI.** Improvement in perception of image sharpness through the addition of noise and its relationship with memory texture. *Human Vision and Electronic Imaging XX,* 2015, vol. 9394, 93941 B
- **B.T. OH ; C.-C. J. KUO ; S. SUN ; S. LEI.** Film grain noise modelling in advanced video coding. *Visual Communications and Image Processing,* 2007, vol. 6508, 650811

- **B. T. OH ; S.-M. LEI ; C.-C. J. KUO.** Advanced film grain noise extraction and synthesis for high-definition video coding. *IEEE Transactions on Circuits and Systems for Video Technology,* 2009, vol. 19 (12), 1717-1729
- **J. DAI ; O. C. AU ; C. PANG ; W. YANG ; F. ZOU.** Film grain noise removal andy synthesis in video coding. *2010 IEEE International Conference on Acoustics, Speech and Signal Processing,* 2010, 890-893
- **A. NORKIN ; N. BIRKBECK.** Film grain syntesis for av 1 video codec. *2018 Data Compression Conference,* 2018, 3-12
- Streaming an image through the eye: The retina seen as a dithered scalable image coder. **MASMOUDI, KHALED et al.** Signal Processing. Image communication. Elsevier Science Publishers, 31 July 2012, vol. 28, 856-869